# FASCICULE DE BREVET EUROPEEN

(11) **EP 1 633 054 B1**
(45) Date de publication et mention de la délivrance du brevet: **30.05.2007**
(21) Numéro de dépôt: 05300585.6
(22) Date de dépôt: 13.07.2005
(51) Int. Cl.: H04B 1/16, H04Q 7/32

(54) **Procédé de calibration d'horloge d'un téléphone mobile, et téléphone mobile correspondant**
Taktkalibrierungsverfahren eines Mobiltelefons, sowie Mobiltelefon dafür
Method for calibrating the clock of a mobile phone, and mobile phone therefor

(30) Priorité: 02.09.2004 FR 0451959
(43) Date de publication de la demande: 08.03.2006
(73) Titulaire: SAGEM Communication, 75015 Paris (FR)
(72) Inventeur: ROMAO, Fernando, 78360, MONTESSON (FR)
(74) Mandataire: Schmit, Christian Norbert Marie

(56) Documents cités:
- EP-A- 0 766 376
- EP-A- 0 858 169
- WO-A-03/105333
- US-A1- 2003 144 020
- US-B1- 6 243 597
- US-B1- 6 725 067

## Description

La présente invention a pour objet un téléphone mobile et un procédé d'utilisation de ce téléphone mobile. Son domaine d'application est celui de la téléphonie mobile. L'invention est utilisable principalement dans le domaine de la téléphonie cellulaire, notamment de type GSM ou UMTS ou autre. Le but de l'invention est de mettre un téléphone mobile dans un état de veille tout en assurant une consommation d'énergie moindre. Cette diminution de la consommation d'énergie permet une augmentation de l'autonomie du téléphone mobile. Un autre but de l'invention est de diminuer l'encombrement des circuits contenus dans un téléphone mobile réduisant ainsi leur prix de revient.

Actuellement, une des principales caractéristiques des différents téléphones mobiles est leur autonomie en mode veille. Cette autonomie est liée à des facteurs d'encombrement et de consommation du téléphone mobile en mode veille.

Le téléphone mobile est relié à un réseau de téléphonie mobile radioélectriquement. Lorsqu'il est en veille, un téléphone mobile écoute le réseau afin de savoir s'il ne fait pas l'objet d'un appel entrant. Ces écoutes ont lieu a des dates prévues par le réseau et communiquées, par le réseau, au téléphone mobile. Dans la suite de cet exposé, on considérera que le téléphone mobile n'est à l'état actif que quand il permet à un utilisateur de communiquer ou de recevoir des données d'un autre utilisateur par l'intermédiaire du réseau de téléphonie mobile. On considérera que le téléphone mobile est en état de veille lorsqu'il n'échange que des informations de signalisation avec le réseau sans que ces informations de signalisation ne soient transmises à un autre utilisateur. Cet état actif ou de veille est en pratique l'état d'un circuit électronique général du téléphone mobile.

Dans l'état de la technique, pour gérer l'état de ce circuit général, on met en oeuvre des dispositifs de veille comportant deux horloges fournissant deux modes de cadencement, un mode de cadencement rapide et un mode de cadencement lent. Le mode de cadencement rapide est produit par une horloge, dont la fréquence est supérieure à une fréquence d'une horloge du mode de cadencement lent. A l'état actif, un microprocesseur 16 du circuit général est cadencé par le mode rapide dont la fréquence est, de préférence, égale à 13 MHZ. A l'état de veille, on échange le mode rapide qui cadence le microprocesseur par le mode lent. Le mode lent a la fréquence de son horloge, de préférence, égale à 32 KHz.

A l'état actif, le circuit est soumis à des contraintes temporelles fortes. Il est alors cadencé par une horloge à quartz à 13 MHZ. Une telle horloge à quartz possède l'avantage de fournir un signal d'horloge très régulier, caractérisé par un bruit de phase faible. Une telle horloge à quartz permet de bien satisfaire les contraintes temporelles de l'état actif. Par contre une horloge à quartz à 13 MHZ implique une consommation d'énergie élevée du téléphone mobile.

A l'état de veille, par contre, le circuit électronique a moins de traitement à exécuter, et les contraintes temporelles sont relâchées. Le circuit est alors cadencé par une horloge lente, de préférence à 32 KHz. L'utilisation d'une horloge à 32 KHz a pour effet de réduire la consommation du téléphone mobile, par exemple dans le rapport de la fréquence des deux horloges (en ce qui concerne l'oscillateur lui-même). Pour le système entier la consommation passe de typiquement 3mA à 13Mhz, avec une activité réduite du microprocesseur, à 30uA à 32khz avec une activité nulle (attente du microprocesseur). Différents types d'horloges lentes, notamment l'horloge à quartz, peuvent être utilisées. Mais, Ces horloges lentes, même celle à quartz, sont sujettes à toutes sortes de dérive notamment une dérive en température. En outre, la présence d'horloge lente, à quartz ou non, provoque un encombrement supplémentaire dans le circuit électronique.

Le problème rencontré dans une telle réalisation est lié à la nature de l'horloge lente. Dans un exemple le plus courant, cette horloge lente est un circuit à quartz. Un circuit à quartz comporte un bloc de quartz d'une forme définie placé entre deux électrodes. Lorsqu'on applique une tension sur ces électrodes, on obtient une déformation mécanique du quartz qui entre alors en oscillation et délivre un signal à une fréquence pour laquelle le circuit à quartz a été calibré. Pour une fréquence donnée, un tel circuit à quartz a un encombrement qui ne peut pas être réduit indéfiniment. En outre, l'emploi d'une horloge à quartz est un frein à l'intégration puisque le circuit à quartz ne peut pas être intégré.

Les horloges à quartz présentent l'avantage d'être précises. Cet avantage est précieux car les horloges rythment le travail du téléphone mobile, et assurent sa synchronisation avec les réseaux. Leur réalisation demande cependant la mise en oeuvre de technologies onéreuses, du fait de spécifications exigeantes. Cette technologie onéreuse augmente le coût global du téléphone mobile.

La présente invention à pour objet de remédier à ces problèmes de technologie onéreuse et de défaut d'intégration ou de dérive. Dans l'invention, on propose un dispositif et un procédé de veille dans lequel on supprime l'horloge, à quartz ou non, de 32 KHz. Dans l'invention, une durée d'un état de veille est alors contrôlée par un dispositif cadencé par le circuit d'horloge à quartz à 13 MHz fournissant un signal d'horloge lent par division. On aboutit donc à un gain de place très important et ceci pour un coût quasiment nul. Ainsi le téléphone mobile ne comporte qu'une seule horloge à quartz.

Au cours de ce basculement en mode de veille, un étalonnage d'une dérive du mode de cadencement lent par rapport au mode de cadencement rapide doit être entrepris. Le problème qui survient alors est celui de la perte de référence temporelle, notamment au moment de la commutation du diviseur. Ce problème est d'autant plus crucial qu'on ne dispose que d'un seul organe temporel : une seule horloge. L'horloge ne peut pas mesurer elle même sa propre dérive.

Dans l'état de la technique un tel problème était résolu en organisant des périodes de recouvrement pendant lesquelles les deux horloges étaient en fonctionnement simultanées. Dans ce cas, on pouvait facilement calibrer une horloge par rapport à l'autre. Avec l'invention ce n'est pas possible car on ne dispose que d'une horloge. Dans l'invention, pour résoudre ce problème on se sert du réseau et des signaux de synchronisation que ce réseau produit pour calibrer l'horloge lente voire aussi l'horloge rapide.

On connaît du document US-B1-6 243 597 un téléphone mobile dans lequel un signal de cadencement commutable en mode lent ou rapide est dérivé d'un circuit d'horloge à quartz unique, calibrée à l'aide d'un signal de calibration délivré par le réseau de téléphonie mobile. Cette horloge a cependant la même consommation d'énergie que l'on soit en mode veille ou en mode réveillé.

Le document WO 03/105333 présente une horloge à quartz unique dont on dérive aussi bien un cadencement rapide ou un cadencement lent, l'horloge étant commutée dans un mode de basse consommation lorsque le téléphone est en mode de veille. Par contre on n'y expose aucune technique particulière en ce qui concerne la calibration de l'horloge.

L'invention a donc pour objet un téléphone mobile selon la revendication 1 ainsi qu'un procédé d'utilisation selon la revendication 10.

La présente invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation d'un téléphone mobile selon l'invention et des principaux éléments qu'il comporte, notamment un premier exemple du dispositif de l'invention;
- Figure 2 : une illustration des étapes mises en oeuvre par le procédé selon l'invention.

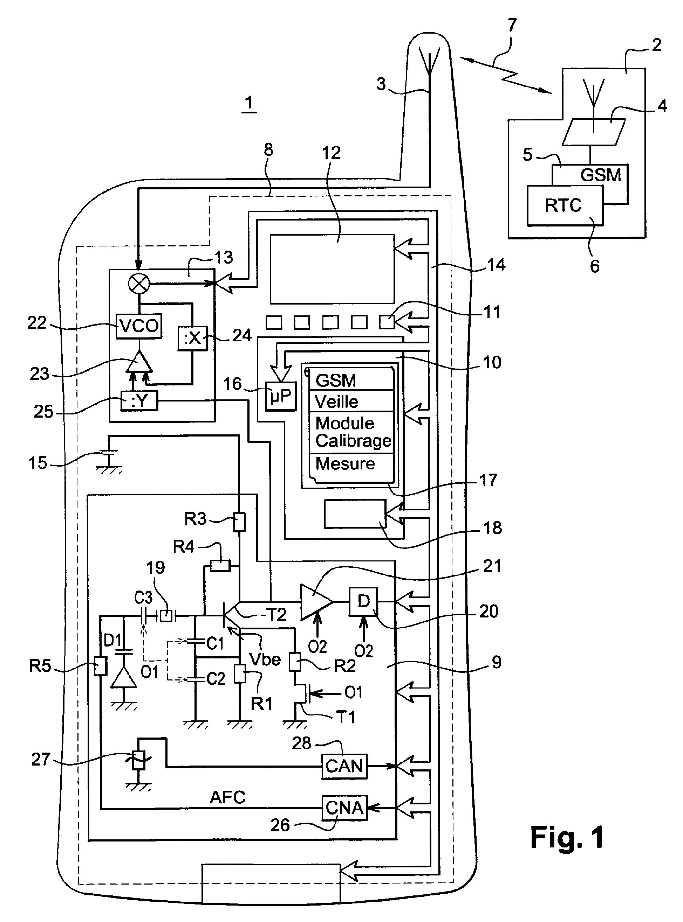

La figure 1 montre un téléphone mobile 1 selon l'invention et les principaux circuits qu'il comporte. Le téléphone 1 mobile est relié à un réseau 2 de téléphonie mobile par un aérien 3. Cet aérien 3 permet au téléphone 1 d'entrer en relation avec le réseau 2. Le réseau 2 comporte une station de base 4. Cette station de base 4 est reliée notamment, mais pas seulement à des réseaux 5 de type GSM, UMTS, DCS, PCS ou autres. Le réseau 5 peut être relié à un réseau 6 commuté téléphonique, RTC. La station de base 4 envoie au téléphone 1 des signaux 7 qui sont des émissions de type radioélectriques. Ces signaux 7 permettent au téléphone 1 d'entrer en relation avec le réseau 2, soit lorsque le téléphone 1 est en veille, soit en transmission de données lorsque le téléphone 1 utilise le réseau 2 pour transmettre et recevoir.

Le téléphone 1 comporte un circuit 8 électronique général. Ce circuit 8 général comporte un circuit d'horloge 9. Ce circuit d'horloge 9 est connecté à un circuit d'organisation 10, un clavier 11, un écran 12 et à un circuit d'émissions réceptions 13 par un bus 14 du téléphone 1. Ce bus 14 comporte un bus d'adresse, un bus de donnée, un bus de commande et un bus d'alimentation.

Une alimentation 15 fournit la puissance nécessaire au circuit d'organisation 10, au circuit de l'horloge 9 et au circuit 13 d'émissions réceptions.

Le circuit d'organisation 10, souvent réalisé sous forme de circuit intégré, comporte un microprocesseur 16, une mémoire programme 17 et une mémoire de donnée 18. Ce microprocesseur 16 exécute des programmes contenus dans la mémoire 17. Dans la suite, il est entendu que les actions exécutées par le microprocesseur 16 le sont sous le contrôle d'un programme général d'exploitation, ici symbolisé par l'appellation GSM, contenu dans la mémoire 17. La mémoire programme 17 comporte aussi un programme VEILLE, et selon l'invention un programme MODULE CALIBRAGE et un programme MESURE.

Le circuit d'horloge 9 comporte deux horloges selon l'invention. Une première horloge est formée par un circuit 19, une seconde horloge est formée par le circuit 19 et par intervention d'un diviseur commandable 20 sur le signal de sortie du circuit 19. Quand le diviseur 20 ne divise pas, le signal de l'horloge est rapide. Il est lent quand la division est effectuée. En pratique, un diviseur 20, lorsqu'il est mis en service par un ordre 02, peut être formé par un compteur délivrant un signal en sortie chaque fois qu'il a compté Q signaux en créneau en entrée (correspondant à une division par Q). Lorsque le diviseur 20 n'est pas en service le signal en entrée n'est pas divisé en fréquence.

Bien entendu, correspondant à chacun des modes est attaché un fonctionnement différent du téléphone 1. Dans le mode rapide, le programme général d'exploitation GSM gère les périphériques tels que les émissions réceptions, l'écran, le clavier, le haut-parleur etc.... Le programme GSM gère aussi un circuit de vocodage ou circuit de traitement de donnée. Dans le mode lent, le programme VEILLE fait gérer par le microprocesseur 16 certains seulement de ces organes : typiquement le circuit 13 d'émissions réceptions, et encore seulement au moment de rendez-vous temporels avec le réseau 2.

D'une manière connue, pour passer du mode rapide au mode lent, la cadence de l'horloge doit être changée. Dans l'état de la technique, il existe deux horloges pour basculer de l'un à l'autre de ces modes. Mais, ce basculement entraîne des problèmes de dérive. Dans l'état de la technique, le circuit électronique 8 comporte un moyen pour calibrer ces dérives. Dans l'invention, on a mis en place le diviseur 20 pour basculer d'un mode à l'autre. Pour résoudre alors ce problème de dérive, dans l'invention avec une seule horloge, on va chercher l'information de dérive dans le réseau 2 par l'exécution du programme MODULE CALIBRAGE.

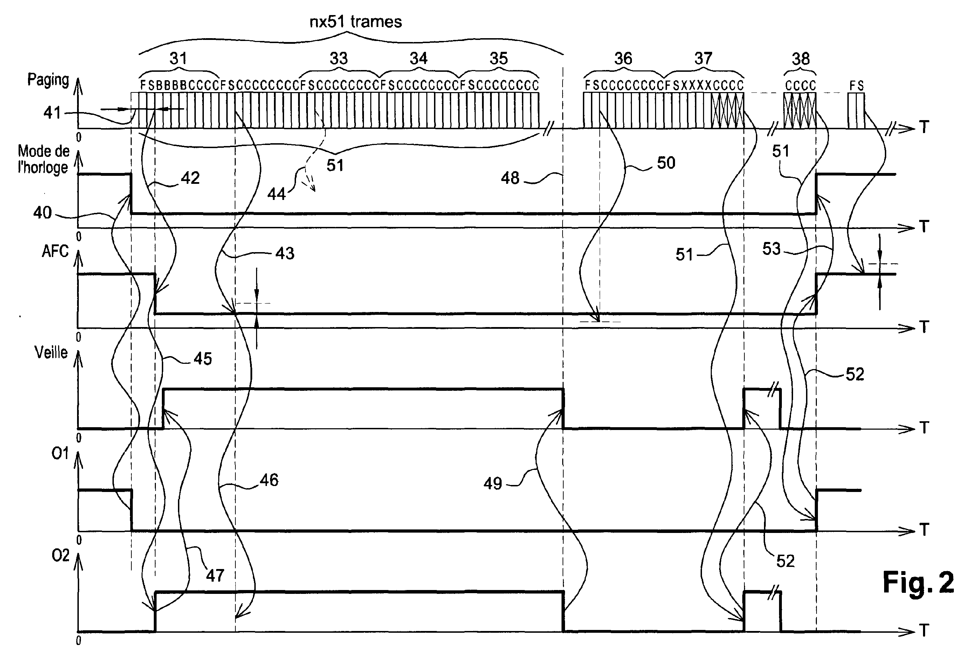

Sur la figure 2 on a représenté différents signaux intervenant dans le téléphone 1 et le procédé de l'invention. Notamment, le signal de balise 7 du réseau 2 comporte, ici en GSM, un arrangement de groupement de trames, avec des groupements de dix ou onze trames dans lesquelles une deuxième trame de chaque groupement comporte un signal de synchronisation précise, connu sous le nom de SCH, symbolisé par la lettre S. Dans l'invention, on se sert de l'existence de ce signal SCH, fréquemment répété afin de résoudre le problème de dérive. Sur la figure 2, ce signal S est mesuré, par le programme de MESURE, et est exploité au cours d'une l'étape 42. En pratique, on verra plus loin comment le circuit 10 traite le signal SCH pour corriger la dérive.

On remarquera que dans la norme UMTS un tel signal SCH existe aussi, répété fenêtre temporelle par fenêtre temporelle quinze fois par trame de 10 millisecondes. Un tel signal existe par ailleurs dans tous les autres protocoles.

Sur le plan pratique, le circuit d'horloge 9 comporte, ici, un quartz 19 à 13 MHz, relié, dans un exemple préféré, à un jeu de capacités commutées C1, C2 et C3. Ces capacités C1, C2 et C3 permettent de stabiliser l'amplitude de résonance du signal de l'oscillateur à 13 MHz. Le circuit d'horloge 9 comporte aussi un circuit de pilotage de polarisation. Ce circuit de pilotage permet de polariser en tension une diode varicap D1 de l'oscillateur utilisant le quartz 19 du circuit d'horloge 9. Le circuit de pilotage de polarisation comporte une résistance de polarisation R1 reliée en parallèle à une résistance R2 auxiliaire. Cette résistance R2 auxiliaire est reliée en série à un interrupteur T1. Cet interrupteur T1 est de préférence un transistor. Le circuit de pilotage de polarisation comporte aussi un transistor T2 dont l'émetteur est relié au couple de résistances R1 et R2 et dont le collecteur est relié à l'alimentation 15 par l'intermédiaire d'une résistance R3. La base du transistor T2 est reliée au collecteur par une résistance R4. Le quartz 19 est relié par une borne à la base du transistor T2 et par une autre borne à un potentiel de référence. Dans ces conditions le quartz 19 vibre et produit un signal électrique qui module la conduction du transistor T2. Le signal d'horloge est disponible sur le collecteur de T2. Ce signal d'horloge est amplifié dans un amplificateur 21 et divisé, ou non, par le diviseur 20.

En pratique, le quartz 19 est contraint par une différence de tension alternative dépendant de la tension entre : la tension de référence et la tension sur la base du transistor T2. La tension sur la base du transistor T2 est égale à la tension d'émetteur de T2 augmenté de la tension Vbe de T2, entre l'émetteur et la base de T2. La tension Vbe est approximativement constante. Si on modifie par contre la valeur de conduction de la résistance de l'émetteur, par enlèvement de la résistance R2, par une ouverture du transistor T1, la tension de l'émetteur augmente. Le transistor T2 consomme moins et surtout le quartz 19 est contraint par une tension alternative moindre. Le quartz 19 est ainsi excité avec moins d'énergie et le reste du montage consomme également moins d'énergie (pour une fréquence donnée, la puissance consommée est proportionnelle à la valeur de la capacité et à l'amplitude du signal alternatif). En modifiant, à la baisse, la tension de référence on peut alors commander le quartz 19 pour qu'il produise toujours un signal, à 13 MHz, pur.

A la mise sous tension du téléphone 1, ce dernier entre en contact avec le réseau 2 par l'aérien 3. L'aérien 3 est relié au circuit 13 d'émissions réceptions. Le téléphone 1 reçoit alors le signal 7 par l'intermédiaire du circuit 13. Le circuit 13 permet au téléphone 1 d'émettre et de recevoir des signaux radioélectriques. Le circuit 13 comporte classiquement un oscillateur 22 de type VCO commandé en tension. Cet oscillateur 22 est commandé par un comparateur 23. Ce comparateur 23 comporte deux entrées. L'une des entrées de ce comparateur 23 est reliée à la sortie d'un premier diviseur 24 par une valeur X. Ce diviseur 24 est relié à la sortie de l'oscillateur 22. Le diviseur 24 divise la fréquence de signal de l'oscillateur 22 par une valeur X. L'autre entrée du comparateur 23 est reliée à la sortie d'un deuxième diviseur 25 par Y. Ce diviseur 25 est relié au circuit d'horloge 9 sur le collecteur du transistor T2. Le circuit d'horloge 9 fournit au diviseur 25 un signal d'horloge stable. Ce diviseur 25 divise ce signal par une valeur Y. Les valeurs X et Y sont choisies de telle sorte que le circuit 13 permette au téléphone 1 de se caler en fréquence, selon une progression par pas de 200 KHz, sur le signal de balise 7 pour lequel il reçoit le plus de puissance.

Les valeurs X et Y sont produites par le circuit 10 d'organisation des tâches des différents circuits du circuit 8 électronique général. Les pas de 200 KHz en GSM ou de 1,25 MHz en MC CDMA ou de 5 MHz en WCDMA, ou autre dans une autre norme, permettent un calage réglementaire de l'oscillateur 22 par rapport à des bandes de fréquences attendues.

Il est connu que, pour une solution de transmission liée à une norme, GSM, UMTS ou autre, la station de base 4 du réseau 2 émette sur une fréquence balise un signal 7 de puissance plus élevé. Le téléphone 1 doit avec son circuit d'organisation 10 et les diviseurs 24 et 25 de son circuit 13 se caler en fréquence pour recevoir ce signal de balise 7 le plus puissant.

Le signal de balise 7 est, en général, émis à une fréquence de balise fixe. Ce signal de balise 7 comporte un signal de synchronisation SCH délivré par le réseau 2. Ce signal de synchronisation SCH est envoyé au microprocesseur 16 par le bus 14 qui le traite et en extrait une valeur d'écart stockée dans un registre de données dans la mémoire de donnée 18.

La figure 2 montre les étapes de mise en oeuvre des moyens décrit précédemment. Une fois mis en service, le téléphone 1 entre en contact avec le réseau 2. Comme au premier abord, le téléphone 1 ne sait pas dans quelles cellules de ce réseau 2 il se trouve, une routine de mise en service est activée. Cette routine de mise en service comporte la recherche d'un signal de balise 7 le plus puissant reçu à l'endroit où se trouve ce téléphone 1. Un tel signal de balise 7, émis par le réseau 2, comporte différents types de signaux qui sont nécessaire à l'accrochage de nouveaux téléphones 1 dans la cellule, et au maintien sous surveillance du téléphone 1 déjà présent. Le signal de balise 7 est permanent. Il est divisé en trame, et ces trames en fenêtres temporelles. La signification de la première fenêtre temporelle d'une trame change d'une trame à l'autre.

Le signal de balise 7 comporte un motif répété toutes les 51 trames, c'est-à-dire approximativement toutes les 235 millisecondes. Ce motif comporte des groupements de dix ou onze trames. Un premier groupement 31 de ce motif est différent des groupements suivants 32 à 35. Il comporte, dans chacune des premières fenêtres temporelles des dix trames qui le compose respectivement, des signaux dits FCCH, SCH, BCCH et CCCH. Ces signaux sont symbolisés par les lettres F, S, B et C en face respectivement des trames auxquelles ils appartiennent

Les signaux FCCH signifient Frequency Control CHannel, ce qui se traduit par Canal de Fréquence. Ils correspondent en fait à une émission d'une porteuse des signaux de signalisation modulée par une sinusoïde pure à 67,7 KHz du centre d'un canal. Cette émission dure pendant toute la fenêtre temporelle. Il suffit donc pour le téléphone 1 d'écouter toutes les dix trames, ou toutes les onze trames selon le cas, quelle est la fréquence du signal de balise 7 qu'il reçoit le plus.

Une fois que cette fréquence des signaux de signalisation est identifiée, dans une trame suivante, mais pour une fenêtre de même rang, le téléphone 1 reçoit un signal de signalisation SCH pour Synchronous CHannel qui veut dire Canal de Synchronisation.

Le premier groupement 31 comporte ensuite un groupe de quatre fenêtres temporelles B, associées dans des trames successives, et qui transportent des signaux de type BCCH pour Broadcast Control CHannel dont la signification est canal de contrôle de la diffusion. Les informations contenues dans ces signaux BCCH sont d'une part la désignation d'une périodicité d'écoute imposée au téléphone 1 pour savoir quand lui seront envoyés les éventuels signaux l'informant de ce qu'il est sujet à un appel entrant.

Le premier groupement 31 comporte ensuite quatre trames, donc quatre fenêtres temporelles, dans lesquelles sont émis des signaux CCCH pour Control CHannel, signifiant canal de commande. Par opposition aux signaux de type BCCH qui sont écoutés par tous les téléphones mobiles situés sous la dépendance d'une station de base, des signaux CCCH ne sont écoutés que par un petit groupe de téléphones mobiles particuliers. Les groupements 32 à 35 suivant le groupement 31 comportent également des signaux FCCH et SCH en début de motif. Chacun comporte deux groupes de quatre fenêtres C avec des signaux CCCH attribués à des téléphones mobiles différents. Les signaux CCCH sont essentiellement destinés à contenir des signaux de type PCH Paging CHannel qui sont les signaux d'appel sur un canal d'appel. En définitive, pour un téléphone 1 mobile l'essentiel est de savoir si dans les quatre fenêtres temporelles des signaux CCCH qui lui sont attribuées se trouvent, ou ne se trouvent pas, des signaux PCH l'informant de ce qu'il est sujet à un appel entrant ou non.

Sur la figure 2, au départ le circuit 8 général :
- est en mode rapide de l'horloge, valeur haute sur le deuxième diagramme, le téléphone 1 est en mode haute consommation,
- le signal de tension de référence, symbolisé ici par AFC, est en valeur haute sur le troisième diagramme,
- le téléphone 1 n'est pas en mode veille, valeur basse sur le quatrième diagramme,
- le téléphone 1 reçoit un ordre O1 de type de consommation à un état un, cinquième diagramme,
- le téléphone 1 reçoit un ordre O2 à un état zéro (sans division par le diviseur) sixième diagramme.

Lors du passage, en mode basse consommation, le microprocesseur 16 agit sur l'interrupteur T1 en le sélectionnant par l'intermédiaire du bus 14 et en lui transmettant l'ordre O1 par le biais de ce bus 14. Quand l'interrupteur T1 reçoit l'ordre O1, passant à l'état zéro, l'interrupteur T1 s'ouvre. La résistance de polarisation R1 est alors découplée de la résistance auxiliaire R2 en parallèle. La résistance équivalente de ce circuit de polarisation est plus forte que précédemment. Le circuit de polarisation passe alors en mode basse consommation. Cette étape est l'étape 40 de la figure 2.

Cet ordre O1 est donnée par le microprocesseur 16 juste avant l'arrivé d'un premier groupement 31 représenté par le début de l'étape 41. Ce basculement de mode entraîne des perturbations au niveau de la fréquence de l'horloge à quartz 16. Il est donc nécessaire de compenser ces perturbations en asservissant la fréquence de l'horloge à quartz 16 sur celle du réseau 2. Cet asservissement se fait par le calibrage du signal de référence AFC. Ce calibrage est obtenu par l'exécution du programme MODULE CALIBRAGE. Le calibrage, étape 41 sur la figure 2, comporte une attente (entre les flèches) de l'apparition d'un nouveau groupement de dix ou onze trames, ici le groupement 31 après la fin de l'étape 40. Après cette attente, le téléphone 1 reçoit les signaux FCCH, noté F, et SCH, noté S, présents dans les premières fenêtres temporelles des deux premières trames du groupement 31. D'une manière connue, le programme d'exploitation, GSM, calcule la correction à apporter au signal d'horloge pour la caler sur le réseau 2. Dans l'invention, à la fin de l'étape 41, lors de la réception du signal S, le microprocesseur 16 peut connaître avec son programme d'exploitation GSM la conséquence de la dérive de l'horloge du fait de son passage en mode basse consommation. Cette connaissance de la dérive est obtenue par l'exécution du programme MESURE. Ce programme MESURE mesure la différence d'écart entre la valeur précédente, en haute consommation, et la valeur présente, en basse consommation. Cet écart est stocké et est utilisé pour moduler la valeur de la tension de référence AFC.

Le signal AFC peut, ainsi dans un exemple, être calibré à 1 volt à la fin du signal SCH du premier groupement 31, comme montré par l'étape 42. Eventuellement, l'AFC peut être aussi calibré, ou recalibré, à la fin du signal SCH du deuxième groupement 32, comme montré par l'étape 43. Le calibrage de l'AFC peut se faire aussi au troisième groupement 33, représenté par l'étape 44 et ainsi de suite. Dans ce dernier cas, le programme VEILLE pourra comporter un sous programme pour lancer le recalibrage régulièrement.

Comme représenté, à l'étape 45 (ou à l'étape 46), dès que l'AFC est bien calibré, c'est à dire dès que la fréquence du quartz 19 ne subit plus de perturbations, le microprocesseur 16 produit et envoie l'ordre O2. Cet ordre O2 entraîne la mise en état de veille du téléphone 1 et notamment la division de la fréquence du signal d'horloge. Cette mise en état de veille est représentée par l'étape 47. L'état de veille se caractérise par l'absence de communication avec un autre abonné du réseau 2 mais pas par l'absence de connexion avec le réseau 2. Il se caractérise surtout par une activité moindre du microprocesseur 16.

Le téléphone 1 reste en état de veille pendant un certain temps. Ce temps de veille est fixé par le réseau 2 qui transmet au téléphone 1 un paramètre n, valant entre 2 et 9. Ce paramètre n conditionne, par la multiplication par la durée de trames, le temps de veille alloué par le réseau 2 au téléphone 1. Quand n vaut 9, la durée d'attente de veille est de l'ordre de 2 secondes. Dans la pratique, n dépend de la charge de la station de base et de la stratégie choisie par l'opérateur de téléphonie mobile (compromis entre rapidité de prise en compte de l'appel entrant et consommation en mode veille).

Avant la fin de cette durée de veille, représenté par la date 48, le microprocesseur 16 désactive, étape 49, l'ordre O2. Cette désactivation entraîne le réveil du téléphone 1. De préférence la date 48 est placée peu de temps avant l'apparition d'un couple de trames F et S, au moins avant la trame S.

Le signal AFC est de nouveau calibré à la fin du signal SCH, représenté par l'étape 50. Le téléphone 1 entre alors en communication active avec le réseau 2 notamment pour savoir s'il est appelé. Si, comme montré sur la figure 2, le téléphone 1 ne reçoit pas de communication, l'ordre 02 est réactivé et le téléphone 1 est remis en état de veille. On notera que dans ce cas, pendant le réveil du téléphone 1 :
a) on a pu recalibrer le signal AFC, éventuellement faire des moyennes pondérées temporellement,
b) on a laissé l'horloge en basse consommation, mais le dysfonctionnement qui en résulte est sans conséquence car les signaux de rendez-vous, ou paging, sont faciles à extraire et à traiter. Ces signaux de rendez-vous sont marqués par des croix sur le premier diagramme de la figure 2. Et ces signaux de rendez vous sont de toute façon traités dès que l'horloge est en mode rapide mais en basse consommation, c'est à dire avec le diviseur 20 désamorcé.

Et toutes les deux secondes le téléphone 1 scrute le réseau 2 pour détecter s'il est en phase de connexion avec un autre abonné.

Toute cette procédure conduit le téléphone 1 qui est en veille à écouter au début du motif de 51 trames le signal FCCH et le signal SCH, ainsi que les quatre fenêtres temporelles des signaux BCCH. Puis le téléphone mobile 1 prend rendez-vous temporel pour des signaux CCCH 37 qui lui sont plus particulièrement destinés. Le téléphone mobile 1 doit se mettre en recherche d'éventuels signaux PCH qui seraient émis pendant ces groupements 36 ou 37. Si de tels signaux PCH ne sont pas émis, parce que le téléphone 1 n'est pas appelé, ce téléphone 1 doit se décaler jusqu'à un autre rendez-vous pour recevoir d'éventuels autres signaux CCCH 38, qui le concernent et qui sont susceptibles d'être envoyés n fois 51 trames plus tard. A l'occasion de ce décalage, le téléphone 1 provoque, étape 51 et 52, la production de l'ordre 02 et sa propre mise en état de veille, en fréquence lente.

Dès que les signaux PCH 38 sont détectés, le microprocesseur 16 produit et envoie l'ordre O1, représenté par l'étape 53. Le téléphone mobile 1 bascule alors en mode haute consommation et en mode rapide. Pour le passage en mode haute consommation, étape 52, le calibrage de l'AFC peut se faire au premier signal SCH suivant et ou au deuxième et ainsi de suite. Pour le mode rapide, étape 53, l'horloge est placée en mode rapide, diviseur désamorcé.

Dès que la communication est finie, le téléphone 1 repasse en état de veille et toute la procédure de mise en veille reprend jusqu'à une nouvelle communication du téléphone 1.

Au cours d'un basculement de mode, la tension alternative aux bornes du quartz 19 subit des variations. Pour réguler cette tension aux bornes du quartz 19, le microprocesseur 16 envoie le signal d'écart de synchronisation par le bus 14 au circuit d'horloge 9. Ce signal d'écart de synchronisation est converti en tension de référence AFC par un convertisseur 26 numérique analogique. Cette tension AFC régule l'une des bornes de la diode varicap D1. Cette borne de la diode varicap D1 est celle commune à la capacité C3 reliée en série à une résistance R5. Cette résistance R5 est reliée en série au convertisseur 26. La tension AFC est une consigne de tension permettant de contrôler en fréquence le quartz 19 afin qu'il soit en permanence calé sur la fréquence du réseau 2. La tension AFC, ou son équivalent, est stockée dans un registre de donnée dans la mémoire de donnée 18. En haute consommation l'AFC est dans un exemple égale à 1,5 volts.

De plus, le montage autour du quartz 19 est modifié afin de moduler la tension aux bornes du quartz 19. Le jeu de capacités commutées C1, C2 et C3 est éventuellement modifié. Car la capacité de charge du quartz 19, qui est en fait la capacité équivalente des capacités commutées qui entourent le quartz 19, doit rester constante. La capacité de charge est par exemple égale à 10.3 picofarads. Par exemple, les capacités commutées C1, C2, et C3 peuvent être commutées, en mode haute consommation, respectivement vers des valeurs pouvant être 150, 150 et 20 picofarads à partir de valeurs valant 40, 40 et 75 picofarads, en mode basse consommation.

Le fait de réduire la consommation du quartz 19 provoque une décroissance de l'amplitude des oscillations. L'invention a résolu ce problème en reliant la sortie du quartz 19 à un amplificateur 21. Cet amplificateur 21 permet d'amplifier à la demande le signal car les impédances internes sont très fortes. Ce signal amplifié est ramené dans des zones directement exploitables par les circuits numériques. De préférence, l'amplificateur 21 est aussi commandé par l'ordre 02.

Pour recalibrer la valeur de la tension de l'AFC, on calcule la dérive de la fréquence du quartz 19 par rapport à la fréquence du signal de synchronisation du réseau qui reste fixe. On obtient ainsi la valeur de l'AFC. Puis, on asservit la fréquence de l'horloge avec le signal de l'AFC. De ce fait, l'horloge à quartz 19 est toujours à 13 MHZ, même en basse consommation. Ceci permet de moduler la tension de polarisation de l'horloge à quartz 16 en fonction de la mesure de la dérive du cadencement rapide lors d'un changement de polarisation.

En mode basse consommation, le téléphone mobile 1 est sensible aux éventuelles variations de température. Ces variations de température sont amplifiées par le fait que les valeurs des capacités commutées sont faibles par rapport à celles utilisées en mode haute consommation. Pour résoudre ce problème, l'invention prévoit un capteur de température 27. Ce capteur de température 27 est relié à un convertisseur analogique numérique 28. Et ce convertisseur analogique numérique 28 est relié au microprocesseur 16 par le bus 14. Le capteur de température 27 envoie au microprocesseur 16 la mesure de la température du quartz 19. Cette mesure permet au microprocesseur 16 de moduler la fréquence d'oscillation du quartz 19 par modification complémentaire du signal AFC.

Le diviseur commandable 20 reçoit l'ordre O2 du microprocesseur 16 par le bus 14. Le diviseur 20 divise la fréquence du quartz 19, pour la ramener à une fréquence inférieure. Cette fréquence inférieure est, en général, de 32 KHz mais elle peut en être différente. Le diviseur 20 envoie par le bus 14 le signal à la fréquence de 32 KHz au circuit d'organisation 10. Cette fréquence de 32 KHz cadence le microprocesseur 16. Le téléphone 1 passe alors en mode veille. Le diviseur commandable 20 produit ainsi le mode de cadencement lent à partir du mode de cadencement rapide lorsqu'il reçoit l'ordre O2.

Les modes décrits précédemment correspondent à des modes où le téléphone mobile 1 est perçu globalement comme actif au yeux de l'utilisateur. Il existe un autre mode qui est le mode arrêt, mode pour lequel le téléphone mobile 1 est dans un état où on ne lui demande qu'une chose : conserver l'heure (et les informations personnelles de l'utilisateur) même si le téléphone mobile 1 est abandonné dans ce mode pendant un mois par exemple.

Ce mode arrêt est donc caractérisé par un besoin de consommation la plus faible possible (afin d'atteindre des autonomies importantes). Le montage décrit ci-avant peut être mis à profit en :
plaçant l'horloge dans son mode lent et, en outre, en
réduisant la capacité de charge du quartz afin de réduire l'amplitude des oscillations donc la consommation

Cette réduction de la capacité de charge a pour effet de modifier le calage en fréquence du quartz (car la capacité de charge n'est plus constante). Mais comme dans un tel mode d'arrêt on ne recherche plus 0,1 ppm de précision mais 10ppm, le rattrapage pourra simplement s'effectuer à l'aide d'un diviseur fractionnaire ou d'un contrôle par logiciel (lors du réveil du téléphone mobile 1 , le microprocesseur 16 trouve dans quel sens il doit corriger l'heure). A titre d'exemple le passage dans ce mode très basse consommation peut induire un décalage de fréquence de 70ppm, il est donc impératif de corriger cette écart de fréquence.

Le passage dans ce mode arrêt s'effectuera par action sur le jeux de capacité C1,C2 , et la diode varicap D1. Par exemple :
150pF, 150pF, 20pF et diode varicap D1 présente pour le mode actif rapide
40pF, 40pF, 75pF et diode varicap D1 présente pour le mode actif lent
15pF, 15pF, 75pF et diode varicap D1 court-circuitée pour le mode arrêt. Dans ce cas un interrupteur, un transistor (non représenté), peut être monté aux bornes de la diode varicap D1 et être fermé en mode arrêt. Cet interrupteur est aussi commandé par le microprocesseur 16.

Ce dernier mode est aussi de préférence associé à une tension de polarisation différente du montage, par le biais de l'ajout d'une résistance R'2 et d'un transistor T'1 (non représenté) en parallèle sur le montage R2, T1 .

Avec l'invention, un montage avec un seul oscillateur à quartz 19 permet ainsi de satisfaire également le critère très basse consommation requis pour l'arrêt du mobile.

Remarque générale sur le signal AFC. Ce qui est décrit ci-dessus correspond au cas d'un système de calage en fréquence sur la base d'une diode varicap D1 (ou système équivalent : capacité commandée en tension). Il existe des systèmes différents pour lesquels la fréquence de l'oscillateur est fixe et pour lequel le décalage en fréquence (entre la fréquence du mobile et la fréquence du réseau) est compensé en réception, dans le domaine numérique lors de la démodulation, et est pris en compte dans les synchronisations du réseau du téléphone mobile 1. En émission le décalage en fréquence est compensé par l'utilisation d'une boucle d'asservissement de phase fractionnaire.

Dans ce cas, le terme AFC est synonyme de registre permettant de caler en fréquence les synchronisations du téléphone mobile 1 , de caler en fréquence la démodulation et de caler en fréquence l'émission. Pour ce qui est des schémas, la diode varicap D1 disparaît (court-circuit) mais les principes généraux décrits restent valables.

## Revendications

1. Téléphone (1) mobile apte à entrer en relation avec un réseau (2) de téléphonie mobile comportant
- un circuit électronique (8) muni d'un circuit d'horloge à quartz rapide (19, 20),
- l'horloge cadençant un fonctionnement du circuit électronique,
- le circuit électronique (8) comportant un circuit diviseur commandable (20) pour produire à la demande (O2) un signal d'horloge lent (20) à partir du signal d'horloge à quartz rapide (19,20),
- le premier signal d'horloge lent étant utilisé en mode lent, et le deuxième signal d'horloge à quartz rapide (19) étant utilisé en mode rapide, le mode lent étant plus lent que le mode rapide,
**caractérisé en ce que**
- le circuit électronique (8) comporte un moyen pour calibrer une dérive du cadencement lent par rapport au cadencement rapide,
- le circuit électronique comporte un circuit de commande (10, 17, O1) pour placer le circuit d'horloge à quartz rapide dans un état basse consommation avant une sélection du mode lent,
- le moyen pour calibrer comporte des circuits (10,17) pour extraire une information de dérive à partir du signal de synchronisation (S) délivré par le réseau (2) de téléphonie (1) mobile pendant que le circuit d'horloge à quartz rapide est dans cet état basse consommation et avant la sélection du mode lent.

2. Téléphone (1) selon la revendication 1, **caractérisé en ce que**
- l'horloge à quartz (9) comporte un circuit ( R1-R4, C1-C4, T1, T2) de pilotage de polarisation en tension.
- le circuit électronique comporte un circuit de commande (10, 17, O1) pour placer le circuit ( R1-R4, C1-C3, T1, T2) de pilotage dans un état basse consommation lors de la sélection du mode lent.

3. Téléphone (1) selon la revendication 2, **caractérisé en ce que**
- le circuit de pilotage de polarisation comporte une résistance auxiliaire (R2) reliée en parallèle d'une résistance de polarisation (R1) et en série avec un interrupteur (T1), de préférence un transistor.

4. Téléphone (1) selon l'une des revendications 1 à 3, **caractérisé en ce qu'**il comporte
- une diode varicap connectée au quartz, et
- un dispositif pour moduler (26) une tension de polarisation de cette diode varicap en fonction d'une mesure (MESURE) de la dérive du cadencement rapide à l'occasion (42) d'un changement de polarisation.

5. Téléphone (1) selon l'une des revendications 1 à 4, **caractérisé en ce qu'**il comporte
- un jeu (C1, C2, C3) de capacités commutées pour modifier un état de polarisation et d'oscillation du quartz (19), ces capacités commutés passant dans un exemple préféré de 75, 40 et 40 picofarads à 20, 150 et 150 picofarads ou à 15,15 et 75 picofarads respectivement.

6. Téléphone (1) selon la revendication 5, **caractérisé en ce qu'**il comporte
- un interrupteur monté aux bornes d'une diode varicap (D1) d'une horloge.

7. Téléphone (1) selon l'une des revendications 1 à 6, **caractérisé en ce qu'**il comporte
- un capteur de température (27) pour mesurer (MESURE) une température du quartz (19) et un circuit (26) pour moduler une fréquence d'oscillation du quartz (19) en fonction de cette mesure (MESURE).

8. Téléphone (1) selon l'une des revendications 1 à 7, **caractérisé en ce que**
- le circuit électronique (8) comporte un seul quartz (19).

9. Téléphone (1) selon l'une des revendications 1 à 8, **caractérisé en ce qu'**il comporte
- un amplificateur (21) commandable en fonction du mode.

10. - Procédé d'utilisation d'un téléphone (1) mobile en relation avec un réseau (2) de téléphonie mobile dans lequel
- on prévoit un mode lent lorsque le téléphone (1) mobile est en veille, un mode rapide, plus rapide que le mode lent, lorsque le téléphone (1) mobile est réveillé, et un changement de mode de l'un à l'autre de ces modes,
**caractérisé en ce que**
- on produit, par une division commandable à la demande (02), un mode de cadencement lent de deuxième horloge à partir d'un mode de cadencement rapide de première horloge,
- on modifie une tension de polarisation d'une horloge à quartz (19) du téléphone (1) mobile et on place le circuit d'horloge dans un état basse consommation avant une sélection du mode lent,
- on mesure (MESURE) à partir du réseau une dérive d'un signal de cadencement délivré par cette horloge à quartz (19), et
- on compense cette dérive par un signal complémentaire de polarisation.

11. Procédé selon la revendication 10 **caractérisé en ce que**
- on mesure (MESURE) la température du quartz (19) de l'horloge à quartz (9).

12. Procédé selon l'une des revendications 10 à 11 **caractérisé en ce que**
- on module une fréquence d'oscillation du quartz (19) en fonction de cette mesure (MESURE).

13. - Procédé selon l'une des revendications 10 à 12 **caractérisé en ce que**
- pour mesurer (MESURE) la dérive on exploite un signal SCH délivré par le réseau.

## Claims

1. A mobile telephone (1) that is able to connect with a mobile telephony network (2) comprising
- an electronic circuit (8) equipped with a fast crystal controlled clock circuit (19, 20),
- the clock putting rhythm to an operation of the electronic circuit,
- the electronic circuit (8) comprising a controllable divider circuit (20) to produce upon request (O2) a slow clock signal (20) from the fast crystal clock signal (19, 20),
- the first slow clock signal being used in slow mode, and the second fast crystal clock signal (19) being used in fast mode, the slow mode being slower than the fast mode,
**characterized in that**
- the electronic circuit (8) comprises means to calibrate a slow rhythm drift with relation to the fast rhythm,
- the electronic circuit comprises a control circuit (10, 17, O1) to place the fast crystal clock circuit in a low consumption state before selection of the slow mode,
- the calibration means comprise circuits (10, 17) to extract drift information from the synchronization signal (S) issued by the mobile telephony (1) network (2) when the fast crystal clock circuit is in this low consumption state and before selection of the slow mode.

2. The telephone (1) according to claim 1, **characterized in that**
- the crystal clock (9) comprises a bias voltage pilot circuit (R1-R4, Cl-C4, T1, T2).
- the electronic circuit comprises a control circuit (10, 17, 01) to place the pilot circuit (R1-R4, C1-C3, T1, T2) in a low consumption state at the time of the selection of the slow mode.

3. The telephone (1) according to claim 2, **characterized in that**
- the bias pilot circuit comprises an auxiliary resistor (R2) connected in parallel with a bias resistor (R1) and in series with an interrupter (T1), preferably a transistor.

4. The telephone (1) according to one of claims 1 to 3, **characterized in that** the telephone comprises
- a varicap diode connected to the crystal, and
- a device to modulate (26) the bias voltage of this varicap diode according to a measurement (MEASURE) of the drift of the fast rhythm on the occasion (42) of a change in bias.

5. The telephone (1) according to one of claims 1 to 4, **characterized in that** the telephone comprises
- a set (C1, C2, C3) of switched capacitors to modify a bias and oscillation state of the crystal (19), these switched capacitors passing in a preferred example from 75, 40 and 40 picofarads to 20, 150 and 150 picofarads or to 15, 15 and 75 picofarads respectively.

6. The telephone (1) according to claim 5, **characterized in that** the telephone comprises
- an interrupter mounted at the terminals of a varicap diode (D1) of a clock.

7. The telephone (1) according to one of claims 1 to 6, **characterized in that** the telephone comprises
- a temperature sensor (27) to measure (MEASURE) a crystal (19) temperature and a circuit (26) to modulate a frequency of oscillation of the crystal (19) according to this measurement (MEASURE).

8. The telephone (1) according to one of claims 1 to 7, **characterized in that**
- the electronic circuit (8) comprises a single crystal (19).

9. The telephone (1) according to one of claims 1 to 8, **characterized in that** the telephone comprises
- an amplifier (21) controllable according to the mode.

10. The process of using a mobile telephone (1) in relation with a mobile telephony network (2) in which
- a slow mode is provided when the mobile telephone (1) is on standby, a fast mode, faster than the slow mode, when the mobile telephone (1) is activated and a mode change from one to the other of these modes,
**characterized in that**
- a slow rhythm mode of a second clock from a fast rhythm mode of a first clock is produced by controllable division upon request (O2)
- a bias voltage of a crystal controlled clock (19) of the mobile telephone (1) is modified and the clock circuit is placed in a low consumption state before the slow mode is selected,
- a clock signal drift issued by this crystal clock (19) is measured (MEASURE) from the network, and
- this drift is compensated for by an additional bias signal.

11. The process according to claim 10, **characterized in that**
- the temperature of the crystal (19) of the crystal clock (9) is measured (MEASURE).

12. The process according to one of claims 10 to 11, **characterized in that**
- an oscillation frequency of the crystal (19) is modulated according to this measurement (MEASURE).

13. The process according to one of claims 10 to 12, **characterized in that**
- an SCH signal issued by the network is used to measure (MEASURE) the drift.

## Patentansprüche

1. Mobiltelefon (1), das mit einem Mobiltelefonnetz (2) in Kommunikation treten kann, Folgendes aufweisend:
- eine Elektronikschaltung (8), die mit einer schnellen Quarztaktgeberschaltung (19, 20) versehen ist,
- wobei der Taktgeber einen Betrieb der Elektronikschaltung taktet,
- wobei die Elektronikschaltung (8) eine steuerbare Teilerschaltung (20) aufweist, um auf Anfrage (O2) ein langsames Taktgebersignal (20) ausgehend von dem Signal des schnellen Quarztaktgebers (19, 20) zu erzeugen,
- wobei das erste langsame Taktgebersignal im langsamen Modus verwendet wird und das zweite schnelle Quarztaktgebersignal (19) im schnellen Modus verwendet wird, wobei der langsame Modus langsamer ist als der schnelle Modus,
**dadurch gekennzeichnet,**
- **dass** die Elektronikschaltung (8) ein Mittel zum Kalibrieren einer Drift der langsamen Taktversorgung im Vergleich zu der schnellen Taktversorgung aufweist,
- **dass** die Elektronikschaltung eine Steuerschaltung (10, 17, 01) aufweist, um die schnelle Quarztaktgeberschaltung auf einen Zustand niedrigen Verbrauchs vor einem Auswählen des langsamen Modus zu stellen,
- **dass** das Mittel zum Kalibrieren Schaltungen (10, 17) aufweist, um eine Driftinformation ausgehend von dem Synchronisationssignal (S) zu extrahieren, das von dem Netz (2) des Mobiltelefons (1) geliefert wird, während sich die schnelle Quarztaktgeberschaltung in diesem Zustand mit niedrigem Verbrauch befindet und vor der Auswahl des langsamen Modus.

2. Mobiltelefon (1) nach Anspruch 1, **dadurch gekennzeichnet,**
- **dass** der Quarztaktgeber (9) eine Schaltung (R1-R4, C1-C4, T1, T2) zum Spannungspolarisierungssteuern aufweist,
- **dass** die Elektronikschaltung eine Steuerschaltung (10, 17, O1 ) aufweist, um die Schaltung (R1-R4, C1-C3, T1, T2) zum Steuern bei der Auswahl des langsamen Modus auf einen Zustand mit niedrigem Verbrauch zu stellen.

3. Mobiltelefon (1) nach Anspruch 2, **dadurch gekennzeichnet,**
- **dass** die Polarisierungssteuerschaltung einen Hilfswiderstand (R2) aufweist, der mit einem Polarisierungswiderstand (R1) parallel geschaltet und mit einem Schalter (T1), vorzugsweise einem Transistor, in Serie geschaltet ist.

4. Mobiltelefon (1) nach einem der Ansprüche 1 bis 3, **dadurch gekennzeichnet, dass** es
- eine Varicap-Diode aufweist, die an den Quarz angeschlossen ist, und
- eine Vorrichtung zum Modulieren (26) einer Polarisierungsspannung dieser Varicap-Diode in Abhängigkeit von einer Messung (MESSUNG) der Drift der schnellen Taktversorgung anlässlich (42) eines Polarisierungswechsels.

5. Mobiltelefon (1) nach einem der Ansprüche 1 bis 4, **dadurch gekennzeichnet, dass** es
- einen Satz (C1, C2, C3) kommutierter Kapazitäten aufweist, um einen Polarisierungs- und Schwingungszustand des Quarzes (19) zu modifizieren, wobei diese kommutierten Kapazitäten bei einer bevorzugten Ausführungsform von 75, 40 und 40 Picofarad auf 20, 150 und 150 Picofarad oder 15, 15 und 75 Picofarad übergehen.

6. Mobiltelefon (1) nach Anspruch 5, **dadurch gekennzeichnet,**
- **dass** es einen Schalter aufweist, der an den Klemmen einer Varicap-Diode (D1) eines Taktgebers installiert ist.

7. Mobiltelefon (1) nach einem der Ansprüche 1 bis 6, **dadurch gekennzeichnet,**
- **dass** es einen Temperatursensor (27) zum Messen (MESSUNG) einer Temperatur des Quarzes (19) und eine Schaltung (26) zum Modulieren einer Schwingungsfrequenz des Quarzes (19) in Abhängigkeit von dieser Messung (MESSUNG) aufweist.

8. Mobiltelefon (1) nach einem der Ansprüche 1 bis 7, **dadurch gekennzeichnet,**
- **dass** die Elektronikschaltung (8) einen einzigen Quarz (19) aufweist.

9. Mobiltelefon (1) nach einem der Ansprüche 1 bis 8, **dadurch gekennzeichnet,**
- **dass** es einen Verstärker (21) aufweist, der je nach Modus steuerbar ist.

10. Verfahren zum Gebrauch eines Mobiltelefons (1) verbunden mit einem Mobiltelefonnetz (2) bei dem
- man einen langsamen Modus vorsieht, wenn sich das Mobiltelefon (1) im Standby-Modus befindet, einen schnellen Modus, der schneller ist als der langsame Modus, wenn das Mobiltelefon (1) wach wird, und einen Moduswechsel von dem einen auf den anderen dieser Modi,
**dadurch gekennzeichnet,**
- **dass** man durch ein steuerbares Teilen auf Anfrage (O2) einen langsamen Taktversorgungsmodus des zweiten Taktgebers ausgehend von einem schnellen Taktversorgungsmodus des ersten Taktgebers erzeugt,
- **dass** man eine Polarisierungsspannung eines Quarztaktgebers (19) des Mobiltelefons (1) modifiziert und die Taktgeberschaltung vor einer Auswahl des langsamen Modus auf einen Zustand mit niedrigem Verbrauch stellt,
- **dass** man ausgehend von dem Netz eine Drift eines Taktversorgungssignals, das von diesem Quarztaktgeber (19) abgegeben wird, misst (MESSUNG) und
- **dass** man diese Drift durch ein ergänzendes Polarisierungssignal ausgleicht.

11. Verfahren nach Anspruch 10, **dadurch gekennzeichnet,**
- **dass** man die Temperatur des Quarzes (19) des Quarztaktgebers (9) misst (MESSUNG).

12. Verfahren nach einem der Ansprüche 10 bis 11, **dadurch gekennzeichnet,**
- **dass** man eine Frequenz des Quarzes (19) in Abhängigkeit von dieser Messung (MESSUNG) moduliert.

13. Verfahren nach einem der Ansprüche 10 bis 12, **dadurch gekennzeichnet,**
- **dass** man zum Messen (MESSUNG) der Drift ein Signal SCH nutzt, das von dem Netz geliefert wird.
